# EUROPEAN PATENT APPLICATION

(11) **EP 4 644 909 A1**
(43) Date of publication of application: **05.11.2025**
(21) Application number: 23911345.9
(22) Date of filing: 18.10.2023
(51) Int. Cl.: G01N 35/02, G01N 35/04, G01N 1/00, G01N 1/28, G01N 1/31

(54) **SAMPLE PROCESSING SYSTEM**

(30) Priority: 28.12.2022 JP 2022211510
(71) Applicant: HITACHI HIGH-TECH CORPORATION, Tokyo 105-6409 (JP)
(72) Inventor: MATSUBARA, Shigeki, Tokyo 105-6409 (JP); SUGIYAMA, Hidetoshi, Tokyo 105-6409 (JP); ENDO, Masashi, Tokyo 105-6409 (JP)
(74) Representative: Strehl & Partner mbB
(86) International application number: PCT/JP2023/037757
(87) International publication number: WO 2024/142561

(57) **Abstract**

An automatic processing system capable of, when a glass slide is conveyed among a plurality of functional units, reading an identification label of the glass slide and determining an efficient processing order and a conveyance path from a processing procedure designated for the glass slide based on the read identification label is implement with a simple configuration. A conveying unit 20 includes a grip portion 50 that holds a glass slide 30, and the grip portion 50 is provided with an identification label reading unit 60 that reads an identification label.

## Description

### Technical Field

The present invention relates to a sample processing system.

### Background Art

In a pathological examination, a biological sample such as tissue or blood is processed to create a slide for a microscopic observation, and the biological sample on the slide is stained and microscopically observed to perform the examination.

In recent years, automation of steps such as a tissue staining step, a cover slip enclosing step to a slide after staining, and a digital image acquisition step of a tissue slide is advanced, and further, automation of the entire steps without human intervention is required.

JP2012-141287A (PTL 1) proposes an example of an automatic processing system that automates the entire steps described above.

JP2005-31087A (PTL 2) discloses a configuration in which a moving device that moves an object such as a microplate has an identifier reading function.

JP2003-526789A (PTL 3) discloses a technique related to a conveyance device in which a barcode scanner is attached to a grip that grips a sample.

### Citation List

### Patent Literature

PTL 1: JP2012-141287A
PTL 2: JP2005-31087A
PTL 3: JP2003-526789A

### Summary of Invention

### Technical Problem

In the automatic processing system implemented by combining a plurality of types of functional units as in PTL 1, for efficient automation, it is necessary to determine a process required for each glass slide and to determine which unit the glass slide is to be conveyed to.

However, in PTL 1, while it is disclosed that the automatic processing system is implemented by a module having what function, it is not specifically disclosed how to handle the glass slide in order to convey the glass slide among the functional units.

PTL 1 discloses that an identifier is attached to the glass slide and the automatic processing system reads the identifier and executes a designated processing procedure, but does not disclose information necessary for an efficient automatic process such as a timing and a location for reading the identifier.

PTL 2 discloses the configuration in which the moving device that moves the object such as the microplate has the identifier reading function.

However, in the moving device described in PTL 2, the object needs to be moved in order to read the identifier, and if the read information indicates that the object does not need to be processed, the object is returned to an original position again, resulting in unnecessary operations and reducing efficiency.

PTL 3 discloses a technique related to the conveyance device in which the barcode scanner is attached to the grip that grips the sample.

However, the technique described in PTL 3 is not a technique focusing on improvement of conveyance efficiency by using an identification label in order to determine a process necessary for each glass slide and determine which unit the glass slide is to be conveyed to when automating the entire steps such as the tissue staining step, the cover slip enclosing step to a slide after staining, and the digital image acquisition step of a tissue slide.

An object of the invention is to implement, with a simple configuration, an automatic processing system capable of, when a glass slide is conveyed among a plurality of functional units, reading an identification label of the glass slide and determining an efficient processing order and a conveyance path from a processing procedure designated for the glass slide based on the read identification label.

### Solution to Problem

A sample processing system according to one embodiment includes: a glass slide supply unit capable of supplying a glass slide to which an identification label associated with conveyance information for conveying the glass slide is attached; a glass slide storage unit capable of storing the glass slide; a staining unit capable of performing a staining process on a sample placed on the glass slide; and a conveying unit capable of conveying the glass slide based on the identification label. Here, the conveying unit includes a grip portion that holds the glass slide, and the grip portion is provided with an identification label reading unit that reads the identification label.

### Advantageous Effects of Invention

According to one embodiment, it is possible to implement, with a simple configuration, an automatic processing system capable of, when a glass slide is conveyed among a plurality of functional units, reading an identification label of the glass slide and determining an efficient processing order and a conveyance path from a processing procedure designated for the glass slide based on the read identification label.

### Brief Description of Drawings

[FIG. 1] FIG. 1 is a top view showing a configuration of a sample processing system.
[FIG. 2] FIG. 2 is a front view showing the configuration of the sample processing system.
[FIG. 3] FIG. 3 is a schematic diagram showing a configuration of a conveying unit.
[FIG. 4] FIG. 4 is a diagram showing a basic operation of conveying a glass slide from a glass slide supply unit to a staining unit.
[FIG. 5] FIG. 5 is a diagram showing the basic operation of conveying the glass slide from the glass slide supply unit to the staining unit.
[FIG. 6] FIG. 6 is a diagram showing the basic operation of conveying the glass slide from the glass slide supply unit to the staining unit.
[FIG. 7] FIG. 7 is a diagram showing a basic operation of conveying the glass slide from the staining unit to a glass slide storage unit.
[FIG. 8] FIG. 8 is a diagram showing the basic operation of conveying the glass slide from the staining unit to the glass slide storage unit.
[FIG. 9] FIG. 9 is a diagram showing the basic operation of conveying the glass slide from the staining unit to the glass slide storage unit.
[FIG. 10] FIG. 10 is a diagram showing the basic operation of conveying the glass slide from the staining unit to the glass slide storage unit.
[FIG. 11] FIG. 11 is a schematic diagram showing an applied operation.
[FIG. 12] FIG. 12 is a diagram showing an application example of the applied operation.
[FIG. 13] FIG. 13 is a diagram showing a modification of the applied operation.
[FIG. 14] FIG. 14 is a top view showing a configuration of a sample processing system.
[FIG. 15] FIG. 15 is a front view showing the configuration of the sample processing system.

### Description of Embodiments

In the drawings for showing the embodiment, the same members are denoted by the same reference signs in principle, and repeated description thereof is omitted. To facilitate understanding of the drawings, hatching may be applied to a plane view.

### (Embodiment 1)

### <Configuration of Sample Processing System>

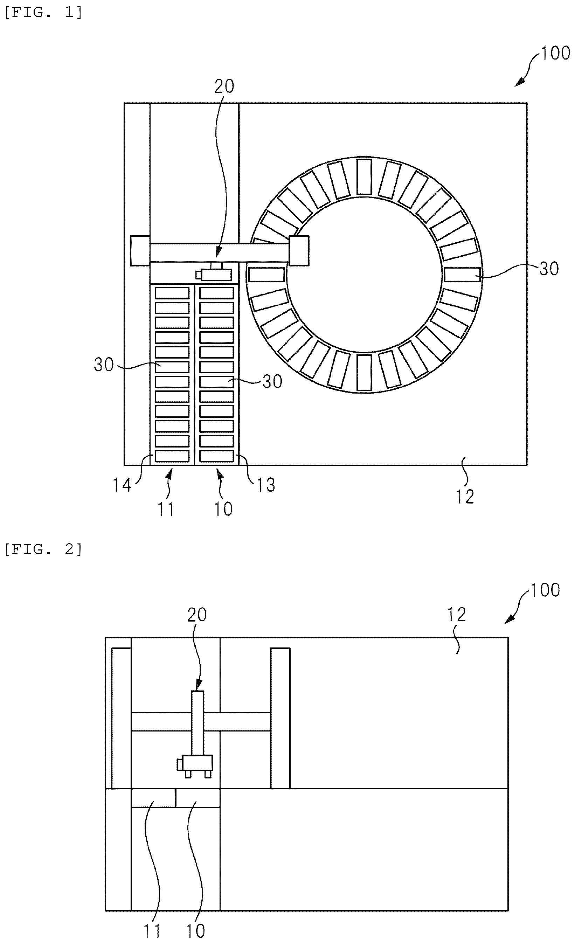

FIG. 1 is a top view showing a configuration of a sample processing system 100 according to Embodiment 1, and FIG. 2 is a front view showing the configuration of the sample processing system 100.

As shown in FIGS. 1 and 2, the sample processing system 100 according to Embodiment 1 includes a glass slide supply unit 10, a glass slide storage unit 11, a staining unit 12, and a conveying unit 20.

The glass slide supply unit 10 includes a tray 13 on which a plurality of glass slides 30 are disposed, and a sample is placed on each of the plurality of glass slides 30 disposed on the tray 13. The glass slide 30 disposed in the glass slide supply unit 10 is the glass slide 30 on which a staining process is to be performed on the sample placed thereon.

The glass slide storage unit 11 includes a tray 14 on which the plurality of glass slides 30 are disposed, and the sample already subjected to the staining process is placed on the glass slide 30 disposed on the tray 14. That is, the glass slide 30 on which the sample subjected to the staining process is placed is stored in the glass slide storage unit 11.

The staining unit 12 is configured to perform the staining process on the sample placed on the glass slide 30 supplied from the glass slide supply unit 10. Examples of a staining method used in the staining unit 12 include "HE staining", "immunohistochemical staining", and "in situ hybridization staining".

The conveying unit 20 is configured to convey the glass slide 30. For example, the conveying unit 20 is configured to convey the glass slide 30 disposed in the glass slide supply unit 10 to the staining unit 12 and convey the glass slide 30 on which the sample subjected to the staining process by the staining unit 12 is placed from the staining unit 12 to the glass slide storage unit 11.

### <Operation of Sample Processing System>

Next, an operation of the sample processing system 100 will be described.

In FIG. 1, the glass slide 30 disposed in the glass slide supply unit 10 is gripped by the conveying unit 20, and then is conveyed from the glass slide supply unit 10 to the staining unit 12 by the conveying unit 20. Then, in the staining unit 12, the staining process is performed on the sample placed on the glass slide 30. Next, when the staining process in the staining unit 12 is completed, the glass slide 30 on which the sample subjected to the staining process is placed is conveyed from the staining unit 12 to the glass slide storage unit 11 by the conveying unit 20. In this manner, the sample processing system 100 operates.

### <Configuration of Conveying Unit>

Next, a configuration of the conveying unit 20 will be described.

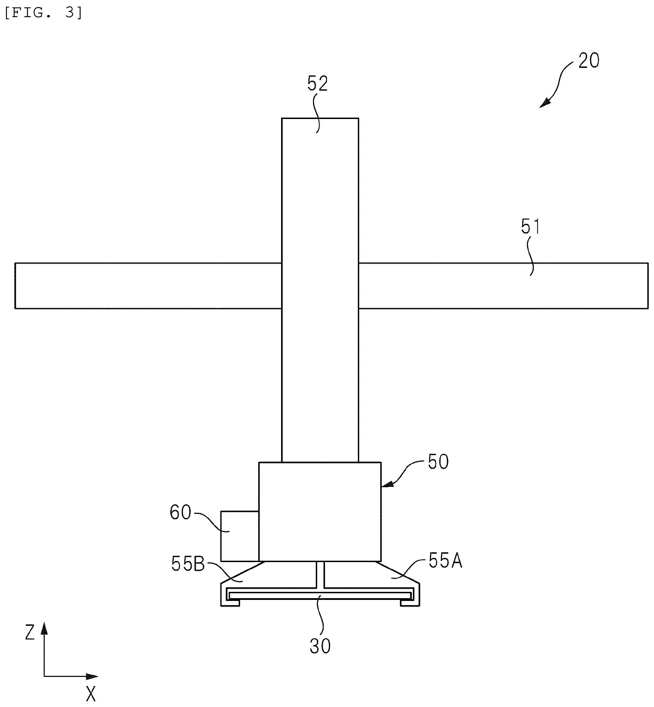

FIG. 3 is a schematic diagram showing a configuration of the conveying unit 20.

In FIG. 3, the conveying unit 20 includes a grip portion 50, an X conveyance shaft 51, and a Z conveyance shaft 52. Here, the grip portion 50 is horizontally movable along the X conveyance shaft 51 and vertically movable along the Z conveyance shaft 52.

The grip portion 50 includes a finger portion 55A and a finger portion 55B as a pair that grip the glass slide 30, and is configured to perform a gripping operation and a releasing operation of the glass slide 30 by opening and closing the finger portion 55A and the finger portion 55B.

The grip portion 50 is provided with an identification label reading unit 60 that reads an identification label. The identification label reading unit 60 is movable integrally with the grip portion 50. That is, the identification label reading unit 60 horizontally moves along the X conveyance shaft 51 together with the grip portion 50, and vertically moves along the Z conveyance shaft 52.

### <Feature of Embodiment 1>

Next, a feature of Embodiment 1 will be described.

The feature of Embodiment 1 is that, for example, as shown in FIG. 3, the conveying unit 20 includes the grip portion 50 that holds the glass slide 30, and the grip portion 50 is provided with the identification label reading unit 60 that reads the identification label attached to the glass slide 30. Accordingly, according to the sample processing system 100 in Embodiment 1, it is possible to implement, with a simple configuration, an automatic processing system capable of, when the glass slide is conveyed among a plurality of functional units, reading an identification label of the glass slide and efficiently conveying the glass slide based on the read identification label.

This point will be described below.

For example, in the sample processing system 100 shown in FIG. 1, the glass slide supply unit 10 is provided with the tray 13, and the plurality of glass slides 30 are disposed on the tray 13. The staining unit 12 can also perform the staining process by disposing the plurality of glass slides 30. That is, both the glass slide supply unit 10 and the staining unit 12 can handle the plurality of glass slides 30.

In this case, the conveying unit 20 sequentially conveys the plurality of glass slides 30 from the glass slide supply unit 10 to the staining unit 12, and the staining unit 12 stocks the plurality of glass slides 30. Then, in the staining unit 12, the staining process is sequentially performed on the sample placed on each of the plurality of stocked glass slides 30. For this reason, the glass slide 30 carrying the sample for which the staining process is completed and the glass slide 30 carrying the sample for which the staining process is not completed yet, that is, the sample on which the staining process is not performed or in the staining process are mixed in the staining unit 12. Therefore, when the glass slide 30 carrying the sample for which the staining process is completed and the glass slide 30 carrying the sample for which the staining process is not yet completed cannot be distinguished from each other, it is difficult to select the glass slide 30 carrying the sample for which the staining process is completed from the plurality of glass slides 30 disposed in the staining unit 12 and to convey the glass slide 30 carrying the sample for which the staining process is completed from the staining unit 12 to the glass slide storage unit 11.

Therefore, for example, for the glass slide 30, by giving the identification label to the glass slide 30 and associating conveyance information for conveying the glass slide 30 with the identification label, it is possible to convey only the specific glass slide 30 to be conveyed among the plurality of glass slides 30. Therefore, in order to select and convey the specific glass slide 30 to be conveyed from the plurality of glass slides 30, it is useful to attach the identification label for specifying each glass slide 30 to a respective one of the plurality of glass slides 30 and to associate the conveyance information with the identification label.

Accordingly, for example, after an identification label reading device is provided in the sample processing system and the identification label attached to the glass slide 30 is read, the glass slide 30 can be selectively conveyed based on the conveyance information associated with the identification label. For example, among the plurality of glass slides 30 stocked in the staining unit 12, the identification label attached to the glass slide 30 carrying the sample for which the staining process is completed is associated with the conveyance information indicating a content that "the staining process is already completed, and the sample can be conveyed to the glass slide storage unit 11", and the identification label attached to the glass slide 30 carrying the sample for which the staining process is not completed is associated with the conveyance information indicating a content that "since the staining process is not completed, the sample cannot be conveyed to the glass slide storage unit 11". Accordingly, for example, based on the identification label attached to the glass slide 30, only the glass slide 30 carrying the sample for which the staining process is completed can be selectively conveyed from the staining unit 12 to the glass slide storage unit 11.

However, for example, when the identification label reading device that reads the identification label is provided in the sample processing system separately from the conveying unit 20, there is room for improvement described below. That is, when the conveying unit 20 and the identification label reading device are separately provided, as a result of a new need to convey the glass slide 30 between the identification label reading device and the conveying unit 20, a conveyance path of the glass slide 30 is complicated, and it is difficult to efficiently convey the glass slide 30. This is a first room for improvement. In addition, when the identification label reading device that reads the identification label is provided in the sample processing system separately from the conveying unit 20, for example, it is necessary to provide an identification label reading device that reads the identification label of the glass slide 30 disposed in the glass slide supply unit 10 and an identification label reading device that reads the identification label of the glass slide 30 disposed in the staining unit 12. This not only complicates the sample processing system, but also raises a cost of the sample processing system by providing a plurality of identification label reading devices. This is a second room for improvement.

In this regard, as shown in FIG. 3, according to the feature of Embodiment 1 in which the identification label reading unit 60 is provided in the grip portion 50 of the conveying unit 20, it is possible to overcome the above-described first room for improvement and second room for improvement. Hereinafter, this will be described by taking a basic operation based on the feature of Embodiment 1.

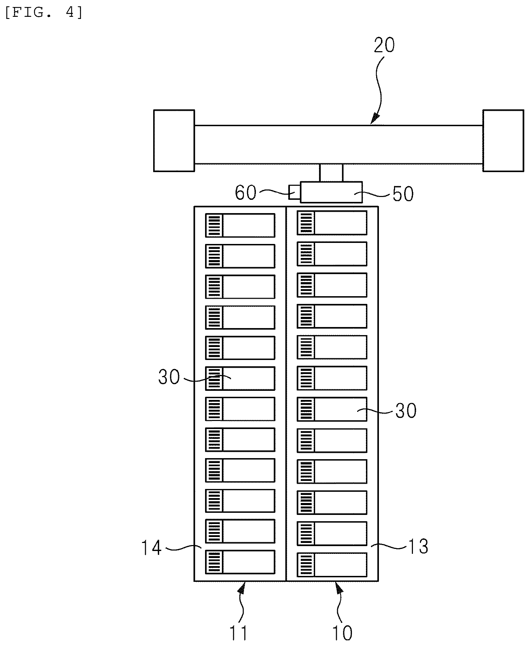

First, a basic operation of conveying the glass slide 30 from the glass slide supply unit 10 to the staining unit 12 will be described with reference to FIGS. 4 to 6.

First, in FIG. 4, the glass slide supply unit 10 includes the tray 13, and the plurality of (12 in FIG. 4) glass slides 30 are disposed on the tray 13. The identification label associated with the conveyance information of the glass slide 30 is attached to each of the plurality of glass slides 30. The identification label is also associated with information for specifying each glass slide 30. Further, the conveying unit 20 includes the grip portion 50 that holds the glass slide 30, and the grip portion 50 is provided with the identification label reading unit 60 that can read the identification label attached to the glass slide 30.

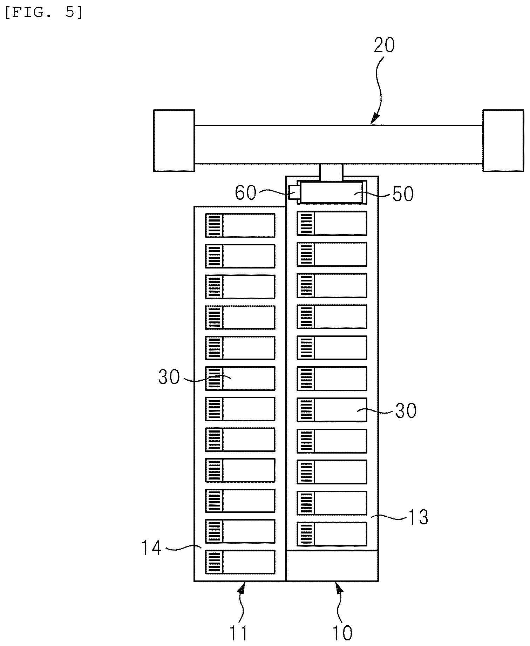

Next, as shown in FIG. 5, the glass slide 30 is disposed immediately below the grip portion 50 of the conveying unit 20 by sliding the tray 13 in the glass slide supply unit 10. In this state, for example, the identification label attached to the glass slide 30 is read by the identification label reading unit 60 provided in the grip portion 50.

When the identification label is read by the identification label reading unit 60, a control unit provided in the sample processing system accesses a data storage unit, and acquires the conveyance information. In the data storage unit, data is stored in which the identification label and the conveyance information are associated with each other. Thereafter, the control unit controls the conveying unit 20 that conveys the glass slide 30 based on the conveyance information.

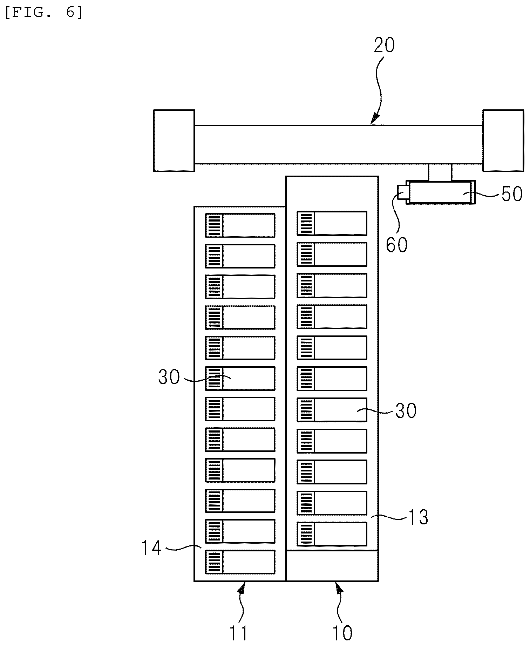

For example, when the conveyance information associated with the identification label is information indicating that "the glass slide 30 is conveyed from the glass slide supply unit 10 to the staining unit 12", the control unit controls the conveying unit 20 to hold the glass slide 30, and then the held glass slide 30 is conveyed to the staining unit 12 by the conveying unit 20 as shown in FIG. 6. In this manner, the glass slide 30 can be conveyed from the glass slide supply unit 10 to the staining unit 12.

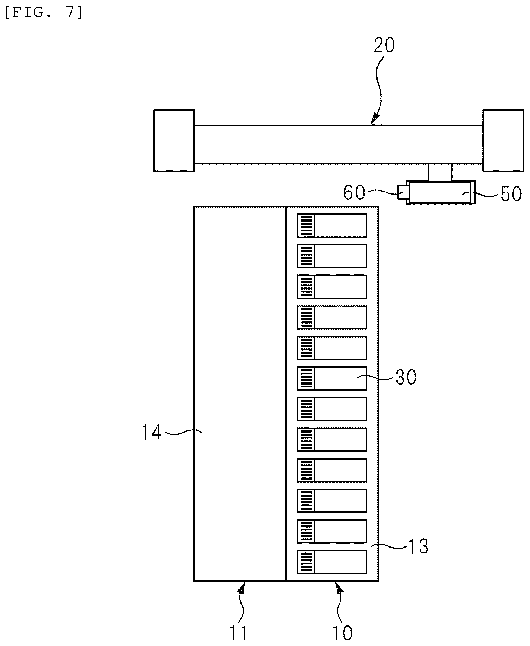

Next, a basic operation of conveying the glass slide 30 from the staining unit 12 to the glass slide storage unit 11 will be described with reference to FIGS. 7 to 10.

First, as shown in FIG. 7, the grip portion 50 of the conveying unit 20 is moved to a position directly above one glass slide 30 among the plurality of glass slides 30 disposed in the staining unit 12. Then, for example, the identification label attached to the glass slide 30 is read by the identification label reading unit 60 provided in the grip portion 50.

When the identification label is read by the identification label reading unit 60, the control unit provided in the sample processing system accesses the data storage unit, and acquires the conveyance information. In the data storage unit, the data is stored in which the identification label and the conveyance information are associated with each other. Thereafter, the control unit controls the conveying unit 20 that conveys the glass slide 30 based on the conveyance information.

For example, when the conveyance information associated with the identification label is information indicating that "the staining process performed on the sample placed on the glass slide 30 is not completed, and the sample is not conveyed to the glass slide storage unit 11", the control unit stocks the glass slide 30 in the staining unit 12 until the staining process is completed.

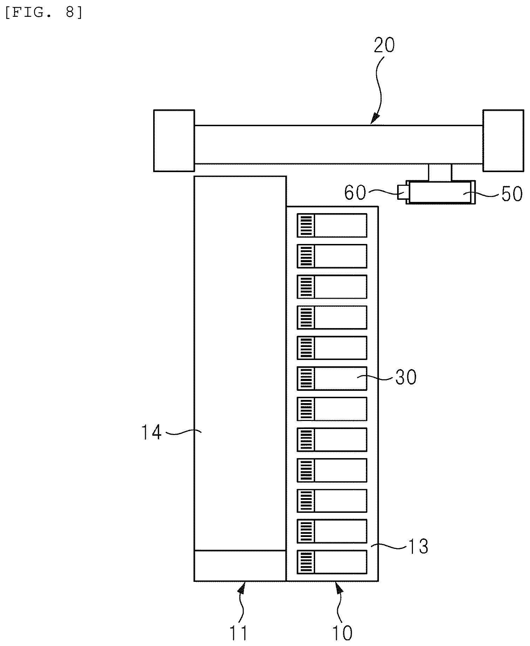

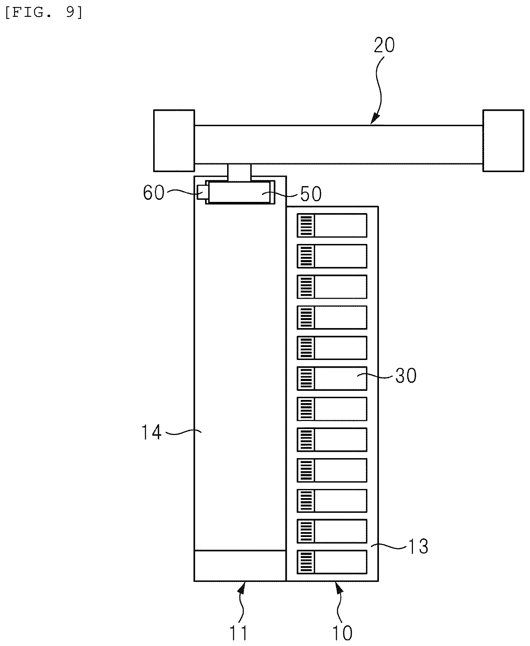

On the other hand, when the conveyance information associated with the identification label is information indicating that "the staining process performed on the sample placed on the glass slide 30 is completed and the sample is to be conveyed to the glass slide storage unit 11", the control unit controls the conveying unit 20 to hold the glass slide 30, and then slides the tray 14 of the glass slide storage unit 11 as shown in FIG. 8. Thereafter, as shown in FIG. 9, the held glass slide 30 is conveyed from the staining unit 12 to the glass slide storage unit 11 by the conveying unit 20.

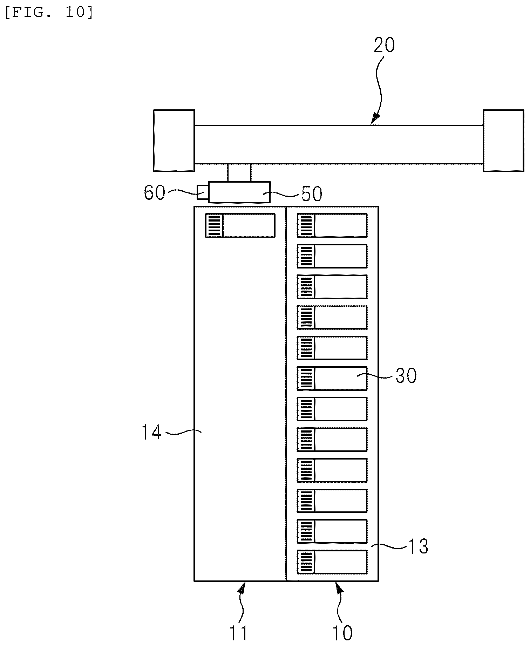

Next, the glass slide 30 is disposed on the tray 14 by the grip portion 50 of the conveying unit 20 releasing the holding of the glass slide 30. Then, as shown in FIG. 10, the tray 14 is slid on which the glass slide 30 is disposed.

In this manner, the glass slide 30 can be conveyed from the staining unit 12 to the glass slide storage unit 11.

According to Embodiment 1, since the identification label reading unit 60 is provided in the grip portion 50 of the conveying unit 20, a reading operation of the identification label performed by the identification label reading unit 60 can be performed by the conveying unit 20. This means that, for example, unlike a configuration in which the conveying unit 20 and the identification label reading device are separately provided, it is not necessary to convey the glass slide 30 between the identification label reading device and the conveying unit 20. As a result, according to the feature of Embodiment 1, the conveyance path of the glass slide 30 is simplified, and the glass slide 30 can be efficiently conveyed with ease. Therefore, according to the feature of Embodiment 1, it is possible to overcome the first room for improvement that appears when the conveying unit 20 and the identification label reading device are formed separately.

Subsequently, according to Embodiment 1, the reading operation of the identification label attached to the glass slide 30 disposed in the glass slide supply unit 10 and the reading operation of the identification label attached to the glass slide 30 disposed in the staining unit 12 can be performed by sharing the identification label reading unit 60 provided in the grip portion 50 of the conveying unit 20. That is, according to the feature of Embodiment 1, it is not necessary to separately provide the identification label reading device for reading the identification label of the glass slide 30 disposed in the glass slide supply unit 10 and the identification label reading device for reading the identification label of the glass slide 30 disposed in the staining unit 12. Therefore, according to the feature of Embodiment 1, it is possible to simplify the sample processing system and to prevent a cost of the sample processing system from raising. Therefore, according to the feature of Embodiment 1, it is also possible to overcome the second room for improvement that appears when the conveying unit 20 and the identification label reading device are formed separately.

As described above, it can be said that a technical idea in Embodiment 1 is a fairly excellent technical idea in that the above-described first room for improvement and the above-described second room for improvement can be solved with a simple configuration.

### <Applied Operation>

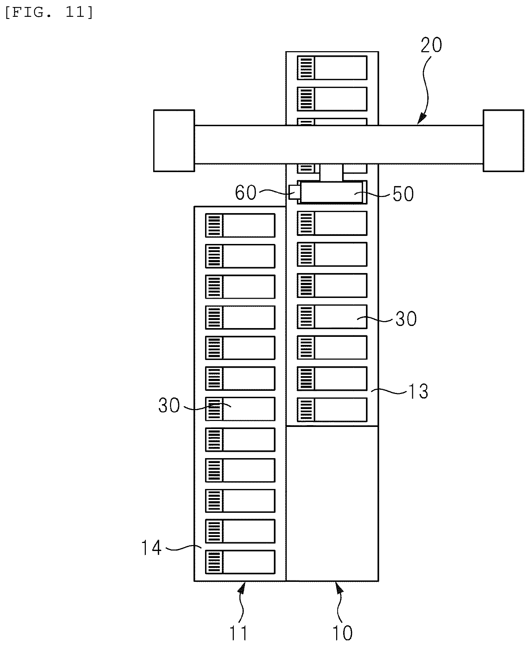

According to the feature of Embodiment 1, not only the above-described basic operation but also the following applied operation can be performed, and thus this point will be described. FIG. 11 is a schematic diagram showing the applied operation.

The applied operation is an operation of collectively reading the identification labels attached to the plurality of glass slides 30 disposed on the tray 13 of the glass slide supply unit 10.

In FIG. 11, the glass slide supply unit 10 includes the tray 13 on which the plurality of glass slides 30 are disposed, and a tray moving unit that slides the tray 13 such that the identification label attached to each of the plurality of glass slides 30 can be read by the identification label reading unit 60. At this time, the conveying unit 20 is configured to, when the tray 13 is slid by the tray moving unit, sequentially read the identification labels attached to each of the plurality of glass slides 30 disposed on the tray 13 by the identification label reading unit 60.

Such an applied operation is effective, for example, when being applied to the following example.

### <<Application Example 1>>

For example, in the sample processing system 100 shown in FIG. 1, it is conceivable that the plurality of glass slides 30 disposed on the tray 13 of the glass slide supply unit 10 are not sequentially conveyed to the staining unit 12 by the conveying unit 20, but the plurality of glass slides 30 are desired to be conveyed to the staining unit 12 in any order. In this case, by performing the applied operation shown in FIG. 11 and grasping the identification labels of all the glass slides 30 before starting a conveyance operation, the plurality of glass slides 30 disposed on the tray 13 can be conveyed to the staining unit 12 in any order. That is, the order of the plurality of glass slides 30 conveyed by the conveying unit 20 can be freely selected by the applied operation.

### <<Application Example 2>>

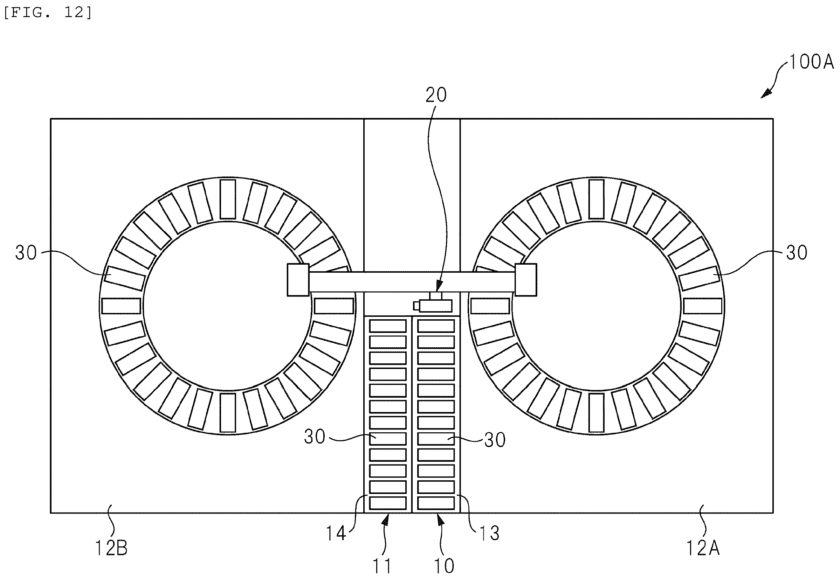

FIG. 12 is a diagram showing Application Example 2 (sample processing system 100A) of the applied operation.

In FIG. 12, the sample processing system 100A includes a staining unit 12A and a staining unit 12B that perform the staining processes different from each other. The plurality of glass slides 30 disposed on the tray 13 of the glass slide supply unit 10 include the glass slide 30 on which a sample to be subjected to the staining process by the staining unit 12A is placed and the glass slide 30 on which a sample to be subjected to the staining process by the staining unit 12B is placed.

In this case, it is possible to easily specify the glass slide 30 to be conveyed to the staining unit 12A and the glass slide 30 to be conveyed to the staining unit 12B by performing the above-described applied operation and grasping the identification labels of all the glass slides 30 before starting the conveyance operation. As a result, based on the grasped identification label, selective conveyance from the glass slide supply unit 10 to the staining unit 12A or the staining unit 12B can be performed.

### <<Further Advantages of Applied Operation>>

When the applied operation shown in FIG. 11 is performed, the glass slide supply unit 10 can stack the plurality of trays 13. For example, when the plurality of trays 13 are stacked as a second floor structure, first, the tray 13 as a first floor portion is slid, and the identification labels of the plurality of glass slides 30 disposed on the tray 13 as the first floor portion are collectively read. Then, after the tray 13 as the first floor portion is returned to an original state, the tray 13 as a second floor portion is slid this time, and the identification labels of the plurality of glass slides 30 disposed on the tray 13 as the second floor portion are collectively read. Accordingly, when the applied operation is performed, the glass slide supply unit 10 in which the plurality of trays 13 are stacked as the second floor structure can be used, and as a result, the number of glass slides 30 that can be stocked in the sample processing system 100A can be increased.

### <<Modification of Applied Operation>>

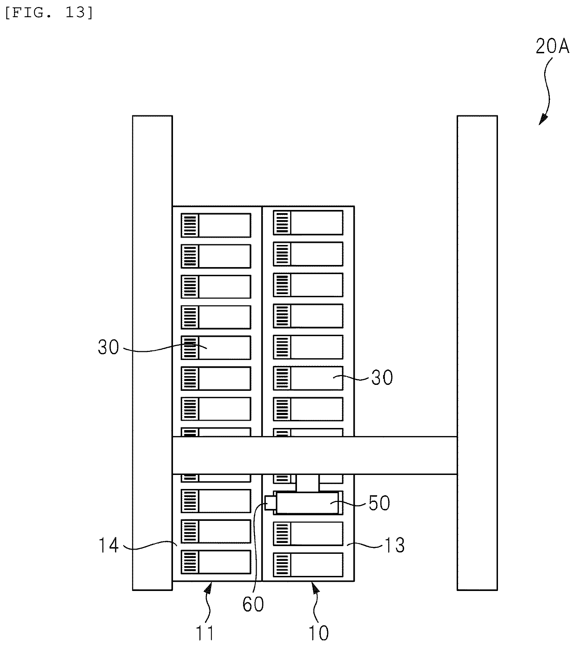

In FIG. 11, the applied operation is described in which the identification labels of the plurality of glass slides 30 disposed on the tray 13 are collectively read by the identification label reading unit 60 provided in the grip portion 50 by moving the tray 13, but the invention is not limited thereto, and for example, as shown in FIG. 13, the identification labels can be sequentially read by the identification label reading unit 60 provided in the grip portion 50 by moving the grip portion 50 of a conveying unit 20A with respect to the plurality of glass slides 30 disposed in a stationary state on the tray 13.

### <Timing of Reading Operation>

A timing at which the identification label reading unit 60 provided in the grip portion 50 performs the reading operation of the identification label can be, for example, the following timings.

That is, the conveying unit 20 can perform the reading operation of the identification label at the following timings.
(1) The conveying unit 20 can read the identification label attached to the glass slide 30 by the identification label reading unit 60 before the glass slide 30 is held by the grip portion 50.
(2) The conveying unit 20 can read the identification label attached to the glass slide 30 by the identification label reading unit 60 in a state where the glass slide 30 is held by the grip portion 50.
(3) The conveying unit 20 can raise the glass slide 30 by a predetermined distance in the state where the glass slide 30 is held by the grip portion 50, and then read the identification label attached to the glass slide 30 by the identification label reading unit 60.
(4) The glass slide supply unit 10 includes the tray 13 on which the plurality of glass slides 30 are disposed, and the conveying unit 20 can read the identification label attached to each of the plurality of glass slides 30 by the identification label reading unit 60 when detecting that the tray 13 is disposed on the glass slide supply unit 10.
(5) The sample processing system 100 includes a tray detection unit that detects that the tray 13 on which the plurality of glass slides 30 are disposed is provided in the glass slide supply unit 10, and a detection state storage unit that stores a detection state detected by the tray detection unit. At this time, the conveying unit 20 can read the identification label attached to each of the plurality of glass slides 30 by the identification label reading unit 60 based on the detection state stored in the detection state storage unit when an activation instruction to start a supply operation of the glass slides 30 is input to the sample processing system 100.
(6) The conveying unit 20 can read the identification label attached to the glass slide 30 by the identification label reading unit 60 when an activation instruction to start the reading operation of the identification label is input to the sample processing system 100.

### (Embodiment 2)

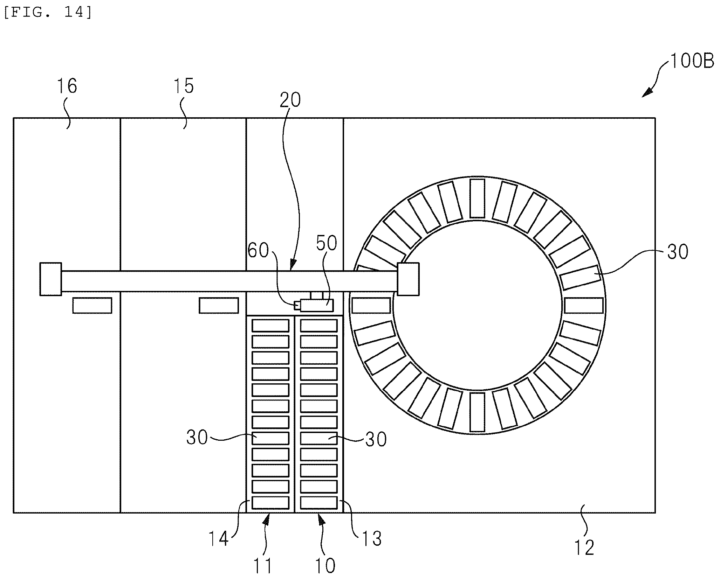

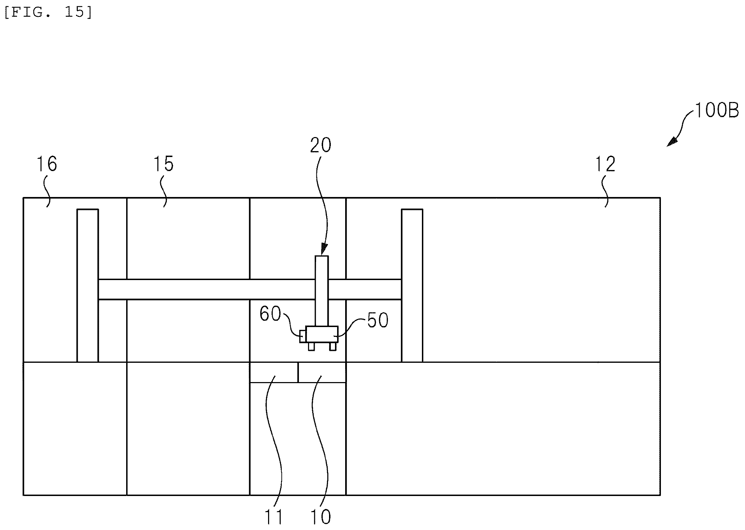

FIG. 14 is a top view showing a configuration of a sample processing system 100B according to Embodiment 2, and FIG. 15 is a front view showing the configuration of the sample processing system 100B.

As shown in FIGS. 14 and 15, the sample processing system 100B according to Embodiment 2 includes the glass slide supply unit 10, the glass slide storage unit 11, the staining unit 12, a cover slip enclosing unit 15, an imaging unit 16, and the conveying unit 20.

The cover slip enclosing unit 15 is a unit configured to dispose a piece of cover glass for sealing the sample on the glass slide 30 on which the sample subjected to the staining process is placed.

The imaging unit 16 is a unit configured to acquire a digital image of the glass slide 30 on which the sample is placed.

Next, a layout of the sample processing system 100B will be described.

In the sample processing system 100B shown in FIG. 14, an occupied region of the sample processing system 100B includes a first side region (left region in FIG. 14) in which a processing unit is disposed, a second side region (right region in FIG. 14) in which the staining unit 12 is disposed, and a center region which is sandwiched between the first side region and the second side region and in which the glass slide supply unit 10 and the glass slide storage unit 11 are disposed. Here, the conveying unit 20 is disposed across the first side region, the second side region, and the center region, and can convey the glass slide 30 to the first side region, the second side region, and the center region.

In particular, in Embodiment 2, the processing unit includes the cover slip enclosing unit 15 that seals the sample placed on the glass slide 30 with the piece of cover glass, and the imaging unit 16 that acquires the digital image of the sample placed on the glass slide 30. In the conveying unit 20, as in Embodiment 1, the identification label reading unit 60 that reads the identification label attached to the glass slide 30 is provided in the grip portion 50.

The sample processing system 100B having such a configuration operates as follows.

In FIG. 14, the glass slide 30 disposed in the glass slide supply unit 10 is conveyed from the glass slide supply unit 10 to the staining unit 12 by the conveying unit 20 after the identification label is read by the identification label reading unit 60 provided in the grip portion 50 of the conveying unit 20. Then, the glass slide 30 on which the sample subjected to the staining process in the staining unit 12 is placed is conveyed from the staining unit 12 to the cover slip enclosing unit 15 by the conveying unit 20 after the identification label is read by the identification label reading unit 60 provided in the conveying unit 20 in a state of being disposed in the staining unit 12. Next, in the cover slip enclosing unit 15, the sample subjected to the staining process and placed on the glass slide 30 is sealed with the piece of cover glass.

Subsequently, the identification label of the glass slide 30 subjected to this process is read by the identification label reading unit 60 provided in the conveying unit 20 in a state of being disposed in the cover slip enclosing unit 15. At this time, when the conveyance information associated with the read identification label is information indicating that "imaging is unnecessary and conveyance to the imaging unit 16 is unnecessary", the conveying unit 20 conveys the glass slide 30 from the cover slip enclosing unit 15 to the glass slide storage unit 11. On the other hand, when the conveyance information associated with the read identification label is information indicating that "imaging is necessary and conveyance to the imaging unit 16 is necessary", the conveying unit 20 conveys the glass slide 30 from the cover slip enclosing unit 15 to the imaging unit 16. Then, the imaging unit 16 performs an acquiring process of a digital image on the glass slide 30. Thereafter, the identification label of the glass slide 30 is read by the identification label reading unit 60 provided in the conveying unit 20 in a state of being disposed in the imaging unit 16, and the conveying unit 20 conveys the glass slide 30 from the imaging unit 16 to the glass slide storage unit 11.

The sample processing system 100B operates as described above.

According to Embodiment 2, when the glass slide 30 is conveyed among a plurality of functional units, the identification label of the glass slide 30 is read, and efficient conveyance of the glass slide 30 can be implemented with a simple configuration based on the read identification label.

In particular, as shown in FIG. 14, in the sample processing system 100B according to Embodiment 2, the functional units are disposed on both sides of the center region where the glass slide supply unit 10 and the glass slide storage unit 11 are disposed. Therefore, according to the sample processing system 100B, a conveyance distance of the glass slide 30 can be shortened, and as a result, the efficient conveyance can be implemented also from the viewpoint of layout.

Although the invention made by the present inventors has been specifically described based on the embodiment, the invention is not limited to the embodiment, and it is needless to say that various modifications can be made without departing from the gist of the invention.

The identification label can be constituted by any one of a bar code, a two-dimensional code, and an RFID, but the technical idea in the above embodiment is not limited thereto, and any type of label may be used as long as the label is associated with the conveyance information related to a conveyance destination of a glass slide and specific information for specifying the glass slide.

In the above embodiment, the configuration example is described in which the glass slide is gripped by the finger portion to hold the glass slide, but the technical idea in the above embodiment is not limited thereto, and can be widely applied to, for example, a configuration in which the glass slide is suctioned and held by a member such as a suction sheet.

### Reference Signs List

10: glass slide supply unit
11: glass slide storage unit
12: staining unit
12A: staining unit
12B: staining unit
13: tray
14: tray
15: cover slip enclosing unit
16: imaging unit
20: conveying unit
30: glass slide
50: grip portion
51: X conveyance shaft
52: Z conveyance shaft
55A: finger portion
55B: finger portion
60: identification label reading unit
100: sample processing system
100A: sample processing system

## Claims

1. A sample processing system comprising:
a glass slide supply unit capable of supplying a glass slide to which an identification label associated with conveyance information for conveying the glass slide is attached;
a glass slide storage unit capable of storing the glass slide;
a staining unit capable of performing a staining process on a sample placed on the glass slide; and
a conveying unit capable of conveying the glass slide based on the identification label, wherein
the conveying unit includes a grip portion configured to hold the glass slide, and
the grip portion is provided with an identification label reading unit configured to read the identification label.

2. The sample processing system according to claim 1, wherein
the conveying unit is configured to read the identification label by the identification label reading unit before holding the glass slide.

3. The sample processing system according to claim 1, wherein
the conveying unit is configured to read the identification label by the identification label reading unit in a state where the glass slide is held.

4. The sample processing system according to claim 1, wherein
the conveying unit is configured to raise the glass slide by a predetermined distance in a state where the glass slide is held by the grip portion, and then read the identification label by the identification label reading unit.

5. The sample processing system according to claim 1, wherein
the glass slide supply unit includes a tray on which a plurality of the glass slides are disposed, and
the conveying unit is configured to read the identification label attached to each of the plurality of glass slides disposed on the tray by the identification label reading unit when detecting that the tray is disposed on the glass slide supply unit.

6. The sample processing system according to claim 1, wherein
the sample processing system includes
a tray detection unit configured to detect that a tray on which a plurality of the glass slides are disposed is provided on the glass slide supply unit, and
a detection state storage unit configured to store a detection state detected by the tray detection unit, and
the conveying unit is configured to read the identification label attached to each of the plurality of the glass slides disposed on the tray by the identification label reading unit based on the detection state stored in the detection state storage unit when an activation instruction to start a supply operation of the glass slides is input to the sample processing system.

7. The sample processing system according to claim 1, wherein
the conveying unit is configured to read the identification label attached to the glass slide by the identification label reading unit when an activation instruction to start a reading operation of the identification label is input to the sample processing system.

8. The sample processing system according to claim 1, wherein
the glass slide supply unit includes
a tray on which the plurality of the glass slides are disposed, and
a tray moving unit configured to slide the tray such that the identification label attached to each of the plurality of glass slides is readable by the identification label reading unit, and
the conveying unit is configured to, when the tray is slid by the tray moving unit, sequentially read the identification label attached to each of the plurality of the glass slides disposed on the tray by the identification label reading unit.

9. The sample processing system according to claim 1, wherein
the glass slide supply unit includes a tray on which the plurality of the glass slides are disposed, and
the grip portion is configured to sequentially read the identification label attached to each of the plurality of the glass slides disposed on the tray by the identification label reading unit while moving on the tray.

10. The sample processing system according to claim 1, wherein
an occupied region of the sample processing system includes
a first side region configured to allow a processing unit to be disposed,
a second side region configured to allow the staining unit to be disposed, and
a center region sandwiched between the first side region and the second side region and configured to allow the glass slide supply unit and the glass slide storage unit to be disposed, and
the conveying unit is configured to be disposed across the first side region, the second side region, and the center region and to convey the glass slide to the first side region, the second side region, and the center region.

11. The sample processing system according to claim 10, wherein
the processing unit includes a cover slip enclosing unit configured to seal a sample placed on the glass slide with a piece of cover glass, or an imaging unit configured to acquire an image of the sample placed on the glass slide.

12. The sample processing system according to claim 1, wherein
the identification label is any one of a bar code, a two-dimensional code, or an RFID.
